(19) **Europäisches Patentamt**
**European Patent Office**
**Office européen des brevets**

(11) **EP 4 778 653 A2**

(12) **EUROPEAN PATENT APPLICATION**

(43) Date of publication:
   **22.07.2026** Bulletin 2026/30

(21) Application number: **25218793.5**

(22) Date of filing: **26.11.2025**

(51) International Patent Classification (IPC):
   **B22F 10/80** (2021.01)   **B22F 10/28** (2021.01)
   **B33Y 50/00** (2015.01)   **G06F 30/20** (2020.01)
   **B22F 10/85** (2021.01)   **G05B 19/4099** (2006.01)

(52) Cooperative Patent Classification (CPC):
   **B33Y 50/00; B22F 10/28; B22F 10/80; B22F 10/85;**
   **B33Y 10/00; B33Y 50/02; G05B 19/4099;**
   **G06F 30/17; G06F 30/20;** B29C 64/386;
   B29C 64/393; G06F 2113/10; G06F 2119/18

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH LA MA MD TN**

(30) Priority: **27.11.2024 US 202418962562**

(71) Applicant: **RTX Corporation**
   **Farmington, CT 06032 (US)**

(72) Inventors:
   • **ANAHID, Masoud**
     **Galena (US)**
   • **LYNCH, Matthew E.**
     **Canton (US)**
   • **BURLATSKY, Sergei F**
     **West Hartford (US)**
   • **FURRER, David U.**
     **Malborough (US)**

(74) Representative: **Dehns**
   **10 Old Bailey**
   **London EC4M 7NG (GB)**

(54) **TOPOLOGY OPTIMIZATION FOR ADDITIVE MANUFACTURING WITH INTEGRATED DEFECT PREDICTION MODEL**

(57)    A controller (140) includes processing circuitry and memory (144) and is operable to control an additive manufacturing process. The processing circuitry receives additive manufacturing parameters and a part design at an analysis module. The processing circuitry is operable to break the part design into a plurality of elements and assign an initial density to each, and determine a likelihood of a defect in each of the plurality of elements utilizing the received additive manufacturing parameters and assigned density, and evaluate the volume of defects across the plurality of elements. The processing circuitry is operable to update at least one of the part design or the additive manufacturing parameters, and then determine the likelihood of updated defects for each of the plurality of elements. The processing circuitry is operable to reach a solution that is at an acceptable volume of defects, while still satisfying an acceptable part design. A method is also disclosed.

FIG.1

EP 4 778 653 A2

## Description

## TECHNICAL FIELD

This application relates to a method and additive manufacturing apparatus which takes in an optimum part design, and determines a likelihood of defects.

## BACKGROUND OF THE DISCLOSURE

Additive manufacturing is known, and typically includes an apparatus that heats a fluent material to cause the fluent material to melt. A part is formed in layers.

It is known defects often form in an additive manufactured part. As an example, should a local temperature at an area exceed a threshold keyhole temperature, a keyhole defect may form. In addition, if the local temperature is less than a threshold lack of fusion temperature, the fluent material may not melt.

Systems are known which can predict the likelihood of such defects.

## SUMMARY OF THE INVENTION

In a featured embodiment, an additive manufacturing apparatus includes a chamber and a controller. The controller includes processing circuitry and memory and is operable to control an additive manufacturing process. The processing circuitry is operable to receive a set of additive manufacturing parameters and a part design at an analysis module. The processing circuitry is operable to break the part design into a plurality of elements and assign an initial density to each of the plurality of elements, and determine a likelihood of a defect in each of the plurality of elements utilizing the received additive manufacturing parameters and assigned density, and evaluate the volume of defects across the plurality of elements. The processing circuitry is operable to update at least one of the part design or the additive manufacturing parameters, and then determine the likelihood of updated defects for each of the plurality of elements. The processing circuitry is operable to reach a solution that is at an acceptable volume of defects, while still satisfying an acceptable part design.

In another embodiment according to the previous embodiment, the likelihood of a defect is assigned a binary value.

In another embodiment according to any of the previous embodiments, the likelihood of a defect at each of the elements has a value equal to, or between 0.0 and 1.0.

In another embodiment according to any of the previous embodiments, the processing circuitry is operable to determine likelihood of defects by determining a predicted local temperature for each of the elements, which is then compared to threshold temperatures.

In another embodiment according to any of the previous embodiments, the threshold temperatures include a keyhole threshold temperature, with a keyhole defect being predicted should the local temperature exceed the keyhole threshold temperatures and the threshold temperature also includes a lack of fusion threshold temperature, and a lack of fusion defect being predicted should the local temperature be less than the lack of fusion threshold temperature.

In another embodiment according to any of the previous embodiments, the processing circuitry is operable to provide the updated at least one of the part design or additive manufacturing parameter with a sensitivity analysis which evaluates how a change to any of the additive manufacturing parameters and the part design will affect the process-induced defects in the part using a mathematical model which will provide a magnitude and a slope to quantify how sensitive the process-induced defects are to the updated part design.

In another embodiment according to any of the previous embodiments, a sum of the defects across all of the elements is utilized relying upon a criticality factor applied to each individual defect in the plurality of defects based on the structural importance of each of the elements.

In another embodiment according to any of the previous embodiments, a criticality is assigned to each of the plurality of elements, and the criticality is multiplied by the likelihood of a defect at each of the elements.

In another embodiment according to any of the previous embodiments, the processing circuitry is operable to determine an expected life of a final part, and communicating with the additive manufacturing apparatus to manufacture the final part if the expected life is acceptable, and returning to further update at least one of the additive manufacturing parameters and the part design if the expected life is not acceptable.

In another featured embodiment, a method of evaluating an additive manufacturing process includes the steps of receiving a set of additive manufacturing parameters and a part design at a controller, breaking the part design into a plurality of elements and assigning an initial density to each of the plurality of elements, determining a likelihood of a defect in each of the plurality of elements utilizing the received additive manufacturing parameters and assigned initial densities, evaluating the volume of defects across the plurality of elements, updating at least one of the part design, and then determining the likelihood of an updated defect for each of the plurality of elements and reaching a solution that is at an acceptable volume of defects, while still satisfying an acceptable part design.

In another embodiment according to any of the previous embodiments, the likelihood of a defect is assigned a binary value.

In another embodiment according to any of the previous embodiments, the likelihood of a defect at each of the elements has a value equal to or between 0.0 and 1.0.

In another embodiment according to any of the previous embodiments, the step of determining the likelihood of the defect reaches a predicted local temperature for each of the elements, which can then be compared to threshold temperatures.

In another embodiment according to any of the previous embodiments, the threshold temperatures include a keyhole threshold temperature, with a keyhole defect being predicted should the local temperature exceed the keyhole threshold temperature and the threshold temperatures also includes a lack of fusion threshold temperature, and a defect being predicted should the local temperature be less than the lack of fusion threshold temperature.

In another embodiment according to any of the previous embodiments, the step of updating the part design utilizes a sensitivity analysis which evaluates how an updated one of the additive manufacturing parameters and the part design will affect the process-induced defects based on a magnitude and a slope that quantifies how sensitive the process-induced defects are to the updated one of the additive manufacturing parameters and the part design.

In another embodiment according to any of the previous embodiments, the sum of a plurality of the defects across all of the elements is utilized relying upon a criticality factor applied to each individual defect in the plurality of defects based on the structural importance of each of the elements.

In another embodiment according to any of the previous embodiments, a criticality is assigned to each of the plurality of elements, and the criticality is multiplied by the likelihood of a defect at each of the elements.

In another embodiment according to any of the previous embodiments, the method provides a weighting value to each of the plurality of elements which is multiplied by the likelihood of a defect at each of the plurality of elements, with the weighting function being dependent on the structural importance of each element, and a maximum of the weighting element times the likelihood of a defect across all of the plurality of elements is compared to a defect threshold, and the design is further updated should the maximum of the value be greater than the threshold.

In another embodiment according to any of the previous embodiments, the method combines a conventional criterion, such as structural compliance, and manufacturing defects into a single objective function, minimize $\alpha * C(\rho) + \beta * max(w_i D_i(\rho,P))$ where $C(\rho)$ represents the structural compliance, and $\alpha$ and $\beta$ are weighting factors that balance the importance of compliance and defect minimization.

In another embodiment according to any of the previous embodiments, further includes determining an expected life of a final part, and communicating with the additive manufacturing apparatus to manufacture the final part if the expected life is acceptable, and returning to further update at least one of the additive manufacturing parameters and the part design if the expected life is not acceptable.

The present disclosure may include any one or more of the individual features disclosed above and/or below alone or in any combination thereof.

These and other features of the present invention can be best understood from the following specification and drawings, the following of which is a brief description.

## BRIEF DESCRIPTION OF THE DRAWINGS

Figure 1 schematically shows an additive manufacturing apparatus.
Figure 2A shows an exemplary part.
Figure 2B shows the exemplary part broken into a plurality of elements.
Figure 3 is a flow chart of a method under this disclosure.
Figure 4A shows an early part design.
Figure 4B shows a subsequent step in reaching a final design for the Figure 4A part.
Figure 4C shows an iterative improvement to the Figure 4B design.
Figure 4D shows a final design.

## DETAILED DESCRIPTION

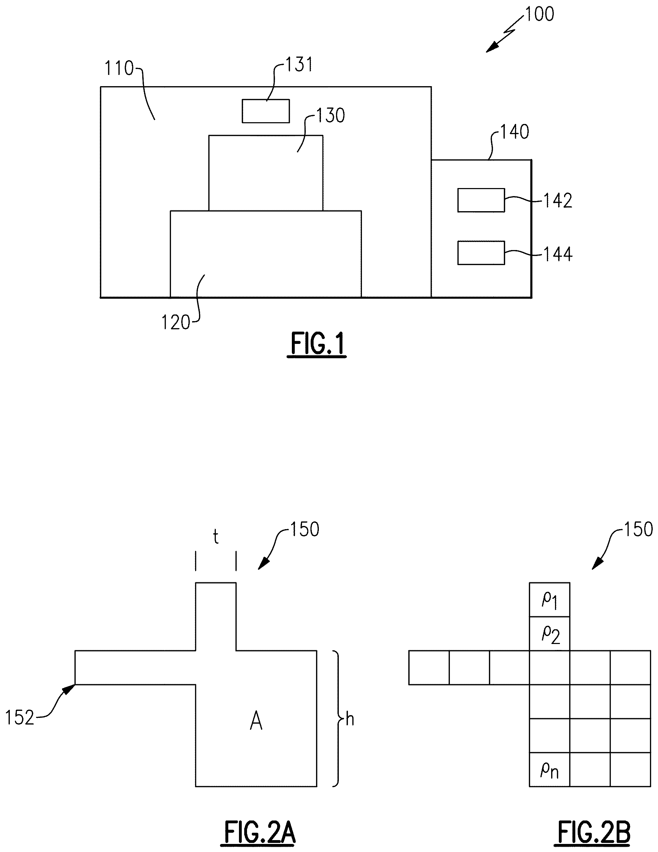

Figure 1 schematically illustrates an additive manufacturing machine 100, such as a laser powder bed fusion additive manufacturing machine. In alternate examples, the powder bed fusion machine can be an electron beam powder bed fusion machine. Other types of additive manufacturing machines may also be used. The exemplary additive manufacturing machine 100 includes a manufacturing chamber 110 with a platform 120 upon which a part 130 is additively manufactured. A computing device (e.g., controller) 140 is connected to the chamber 110 and is operable to control an additive manufacturing system 131 according to any known additive manufacturing control system. As known, system 131 will deposit and then heat a fluent material in layers to form part 130.

Included within the controller 140 is one or more processors 142. The processor(s) 142 may be collectively operable to receive and interpret input operations to define a sequence of the additive manufacturing, and memory 144 operable to store software instructions (e.g., modules) for directing the controller 140 and for analyzing received operations. As utilized herein "operations" refers to instructions specifying operational conditions and sequences for one or more step in an additive manufacturing process. The controller 140 can, in some examples, include user interface devices such as a keyboard and view screen. In alternative examples, the controller 140 can include a wireless or wired communication apparatus for communicating with a remote user input device such as a PC.

In an example operation, a part design is provided by a user to the controller 140. The part design is typically a 3D modeling file, such as an STL file. The controller 140 includes internal software modules that may be operable to convert the STL file into an additive manufacturing instruction set (e.g., process), and the additive manufacturing machine 100 executes the process to create the part.

Flaws such as keyhole or lack of fusion pores can occur either as a result of non-optimal machine parameters or randomly as a result of stochastic variation of uncontrolled and uncontrollable build parameters during additive manufacturing operation.

Included within the controller 140 is a module for determining when a process will generate systematic or preventable flaws, and optimize the performance parameters of the additive manufacturing system 100 accordingly. However, even when optimized, such additive manufacturing processes may still generate the stochastic flaws, and a manufacturing process that is certified as being free of preventable flaws may still include stochastic flaws and be unacceptable for a given application.

In order to determine if an operation is likely to generate stochastic flaws, the controller 140 includes an analysis tool that may be operable to receive a part design and a set of additive manufacturing parameters and determine the chance that the operation will generate stochastic flaws, and how many stochastic flaws are likely to develop.

The controller 140 may include one or more computer processors, memory, storage means, network devices, input and/or output devices, and/or interfaces. The computing devices may be operable to execute one or more software programs. The computing devices may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing devices may be a desktop computer, laptop computer, smart phone, tablet, or any other computer device. Input devices may include a keyboard, mouse, touchscreen, etc. The output devices may include a monitor, speakers, printers, etc. Each of the computing devices may include one or more processors 142 coupled to memory. The computing devices may be coupled to each other by one or more connections. The computing device(s) may be collectively operable to implement any of the functionality disclosed herein. The connection may be a wired and/or wireless connection. The connections may be established over one or more networks and/or other computing systems.

Method and controls that are capable of identifying defects are known. Examples may be found in U.S. Patent 10,254,730 or 11,531,920, both owned by the Applicant here. The disclosures of these patents are incorporated herein by reference. Other methods and controls capable of identifying defects may be utilized.

On a more simplified level, a local temperature is determined at each of a plurality of elements in a part design formed from a plurality of additive manufacturing parameters. That local temperature may then be compared to a keyhole threshold temperature. If the local temperature exceeds the keyhole threshold temperature then there is some likelihood that a keyhole defect (essentially a pore) may be formed at the element. On the other hand, should the local temperature be determined to be less than a lack of fusion threshold temperature (non-melted area) then a lack of a fusion defect may be identified.

Figure 2A shows a part 150, and illustrates some of the challenges in forming parts with additive manufacturing. The height of the part h may raise challenges. As an example, as the height h increases, heat may build up at the top of the part which could result in keyhole defects due to excessive local temperatures. This is due to the repeated formation of layers to reach the height h, and the increasing heat from the earlier layers.

Further, a thin wall thickness t can result in heat buildup due to a short track length, increasing the risk of keyhole defect.

Overhangs such as shown schematically at 152 often suffer from poor thermal management leading to lack of fusion defects due to insufficient local temperatures.

Large cross-sectional areas A can cause excessive heat flux, raising the likelihood of keyhole defects.

Current topology optimization techniques prioritize mechanical performance and material efficiency, but overlook defect minimization. On the other hand, defect minimization techniques typically do not preserve optimized mechanical performance.

Figure 2B shows a first step in the disclosed method. Initially part 150 is broken into a plurality of elements 1...n. The breaking of the part design into the plurality of elements can be done using a known mesh generation tool.

The method may initially assign a nominal density $\rho_i = 1$ to each element, indicating a fully dense material to start.

Then, three different approaches can be taken for the overall method here.

In embodiment one, defects can be used as an objective function and other typical criteria utilized in topology optimization (e.g., volume, mechanical performance such as compliance or stress, etc.) are constraints. The objective function quantifies the weighted defects in the part, incorporating a criticality factor $w_i$ for each element. Then, there are two possible scenarios for the objective function.

First, the method may minimize the sum of the weighted defects across all of the elements:

Objective: minimize $\Sigma_i w_i D_i(\rho, P)$

In this equation, $D_i$ is a defect prediction at each element $i$, $\rho = [\rho_1, \rho_2, \ldots, \rho_n]$ representing the densities of all elements. P represents process parameters.

The defect criticality factor $w_i$ adjusts the impact of the defects in each element based upon the structural importance of the element. As an example, the importance of the particular element to the overall life of the part may impact on the selected criticality factor $w_i$.

Alternatively, the method may minimize the maximum value of $w_i D_i$ across all elements:

Objective: minimize $max(w_i D_i(\rho, P))$

In another embodiment, the objective function may be taken as the typical criteria, and in particular structural compliance of a final part design, and the defects may be utilized as a constraint:

Constraint: $max(w_i D_i(\rho, P)) \leq threshold$

In another embodiment there may be a composite objective function that combines multiple criteria, such as structural compliance and manufacturing defects to a single objective function:

Objective: minimize $\alpha * C(\rho) + \beta * max(w_i D_i(\rho, P))$

In this equation $C(\rho)$ represents the structural compliance or deviation from an updated structural design compared to the optimum structural design. Parameters $\alpha$ and $\beta$ are weighting factors that balance the importance of compliance and defect minimization at each of the plurality of elements.

In each instance, the defect prediction $D_i$ can be defined in two ways. In one way, that may be thought of a deterministic prediction, $D_i$ is a binary value where it is 0.0 if no defect is predicted and 1.0 if a defect is predicted. On the other hand, a probabilistic prediction $D_i$ can take a value between 0.0 and 1.0 representing the probability of the defect.

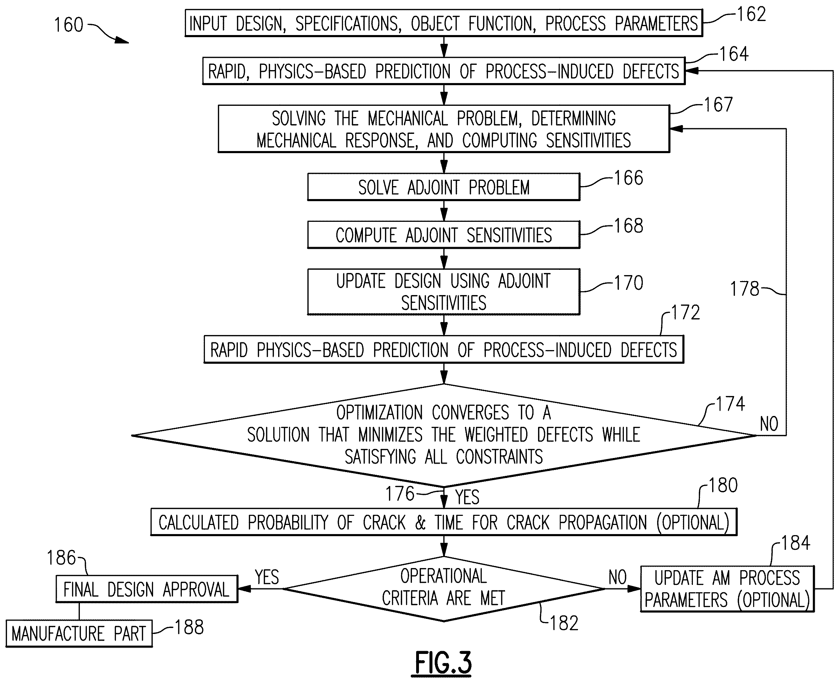

Figure 3 shows a flow chart 160 for this disclosure. At step 162 an initial design, specifications, objective function, and process parameters are received at a controller, such as controller 140 of Figure 1.

A rapid physics-based prediction of process-induced defects is determined at step 164.

At step 167, the method solves a mechanical problem, determines a mechanical response and/or computes sensitivities.

At step 166 the method solves an adjoint problem. In implementations, this may be a differential equation. Derivatives variable of interest can be computed through the solution of the adjoint equation.

Sensitives are then computed for each of the adjoint problems at step 168.

The sensitivity of step 168 with respect to the design variables, and in particular the element densities $\rho$ is determined as follows:

$$w_i \frac{\partial(D_i)}{\partial \rho}$$

This step involves differentiating defect indicator $D_i$ with respect to the element density. This may include a differentiation through a temperature prediction model to account for the influence of densities on other elements. Stated another way, the sensitivity is determined utilizing a mathematical model to determine how it changes relative to the inputs, such as part design to affect the final output, or final part. For example, the occurrence of defects may be sensitive to introduction or removal of a hole, or a change to hole size due to induced changes to the local thermal history. A derivative of the mathematical model determines the sensitivity, which will provide a magnitude and slope which quantifies how sensitive the output is to the incremental changes in the part design.

The design is then updated utilizing the adjoint sensitivities at step 170. Then, there is another rapid physics-based prediction of process-induced defects ran at step 172 with the updated design and process parameters.

At step 174 the method determines whether this optimization converges to a solution that minimizes weighted defects while still satisfying all constraints. If not, at step 178, the method returns to step 166.

However, if the solution does converge then at step 176 the method may lead to a simulation of a part lifetime utilizing the operational conditions and current part design at step 180. This is an optional step. If step 180 results in operational criteria being met at step 182, then at step 186 there is a final design approval, and the method may then move to manufacture the part 130 at step 188.

Known part lifing software may be utilized for step 180. One known program is Sentient Science Component DC-AM Life Prediction software.

On the other hand, if the criteria are not met at step 182, then at step 184 the method returns to step 164 to begin the topology optimization cycle again. This is also an optional step.

This disclosure could be said to utilize a gradient-based optimization algorithm. As examples, the method of moving asymptotes or optimality method may be utilized to update the density of each of the elements $\rho$.

The method starts with an initial density distribution. Then, the iterative process as described with regard to Figure 3 occurs. For each iteration, a (e.g., fast acting) physics-based model computes local temperatures $T_i$ for each element based on the current element density distribution. Physics-based models for determining local temperatures in an additively manufactured part are known.

Examples of such a model is the patented defect prediction model U.S. Patents 10,254,730, 10,252,512, 10,252,511, 10,252,510, 10,252,509 and 10,252,508. This model is licensed to Hexagon and is part of the commercial software "Simufact Additive."

The predicted defects $D_i$ is then reached by comparing the local tempetuare to the threshold keyhole temperature and the threshold lack of fusion temperatures. Then, the objective functions and constraints are utilized to evaluate the design. Further, the sensitivities are derived for updating any design variables, including accounting for the influence of densities of other elements on the local temperatures at remote elements, and resulting in defects. Then, the density distribution is updated using the chosen optimization algorithm. This is repeated until convergence criteria are met. As an example, if a change in objective function is below a certain threshold the method converges.

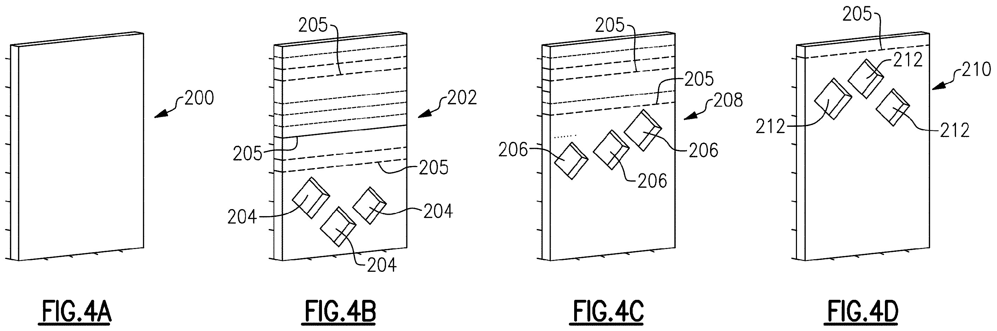

Figures 4A-4D show an example of an iterative change in a part design.

An initial part 200 is shown having no holes. There may be no defect identified in such a design.

On the other hand, Figure 4B shows a design wherein holes 204 have now been added to the part near the initial layers, or bottom, of the part 202. The lines 205 shown as dots near the top of the part represent elements that are prone to defect formation.

In Figure 4C, the holes 206 have been moved further upwardly in an iterative part design 208. As can be seen, there are fewer defects 205 likely formed in the part.

Having the holes in the part limits downward heat dissipation, leading to excessive temperature buildup in the layers formed above the earlier layers. This could result in keyhole defects.

Figure 4D shows a final part design 210 having holes 212 moved even further upwardly, or later in the formation process. There is now a much reduced formation of defects 205 due to less heat input at the top of the part, which may be acceptable.

This invention integrates topology optimization with a defect prediction model that accounts for keyhole and lack of fusion defects. It considers geometric and process parameters and incorporates the effect of geometric features such as height, wall thickness, overhangs, cross-sectional area, and additive manufacturing process parameters on defect formation. This provides a more comprehensive optimization approach. The process parameters may include but are not limited to laser power, scan speed, spot size, and/or layer thickness.

In addition, there is criticality based optimization, including assigning a criticality factor to weight defects impact based upon structural importance, enabling defect minimization in critical areas. The disclosure may use probabilistic or deterministic defect modeling, supporting both binary and probabilistic defect predictions. This allows for flexible and accurate defect assessment.

The disclosure also enhances manufacturing feasibility, ensuring that optimum designs are not only mechanically efficient, but also manufacturable without significant defects, bridging the gap between design and manufacturing.

There is broad applicability, which can adapt to various additive manufacturing processes, machines, materials, and result in enchanted part quality and applicability across different industries.

There is also process-specific optimization, such that the design can be optimized based on the process being used. This disclosure need not make the assumption that properties will be uniform or that a design does not affect manufacturing properties or vice versa.

The results are improved part quality, reducing the occurrence of defects resulting in parts with superior mechanical properties and relatability. Further, this disclosure is cost effective in minimizing the need for post-processing and rework by reducing defects in the design stage, leading to lower production costs and increased efficiency.

There is also an alignment between the design and manufacturing steps, ensuring the optimized designs are feasible for manufacturing, bridging the gap between theoretical design and practical implication.

There is also enhanced structural integrity by accounting for criticality factors. The disclosure ensures that structurally important areas are prioritized, leading to safer and more robust parts.

Further, the disclosure is applicable to a wide range of additive manufacturing processes and materials, making it a versatile solution for various industries. The disclosure also streamlines the optimization process by integrating defect prediction, reducing the time needed to iterate between design and manufacturing stages.

This disclosure is an innovative approach that provides a method that combines advanced defect prediction with topology optimization, in the field of additive manufacturing.

Although embodiments of this disclosure have been shown, a worker of ordinary skill in this art would recognize that modifications would come within the scope of this disclosure. For that reason, the following claims should be studied to determine the true scope and content of this disclosure.

**Claims**

1. An additive manufacturing apparatus comprising:

   a chamber;
   a controller, the controller including processing circuitry and memory and operable to control an additive manufacturing process;
   the processing circuitry operable to receive a set of additive manufacturing parameters and a part design at an analysis module;
   the processing circuitry operable to break the part design into a plurality of elements and assign an initial density to each of the plurality of elements, and determine a likelihood of a defect in each of the plurality of elements utilizing the received additive manufacturing parameters and assigned density, and evaluate the volume of defects across the plurality of elements;

the processing circuitry operable to update at least one of the part design or the additive manufacturing parameters, and then determine the likelihood of updated defects for each of the plurality of elements; and

the processing circuitry operable to reach a solution that is at an acceptable volume of defects, while still satisfying an acceptable part design.

2. The apparatus as set forth in claim 1, wherein the likelihood of a defect is assigned a binary value, and/or wherein the likelihood of a defect at each of the elements has a value equal to, or between 0.0 and 1.0.

3. The apparatus as set forth in claim 1 or 2, wherein the processing circuitry is operable to determine likelihood of defects by determining a predicted local temperature for each of the elements, which is then compared to threshold temperatures.

4. The apparatus as set forth in claim 3, wherein the threshold temperatures include a keyhole threshold temperature, with a keyhole defect being predicted should the local temperature exceed the keyhole threshold temperatures and the threshold temperature also includes a lack of fusion threshold temperature, and a lack of fusion defect being predicted should the local temperature be less than the lack of fusion threshold temperature.

5. The apparatus as set forth in any preceding claim, wherein the processing circuitry is operable to provide the updated at least one of the part design or additive manufacturing parameter with a sensitivity analysis which evaluates how a change to any of the additive manufacturing parameters and the part design will affect the process-induced defects in the part using a mathematical model which will provide a magnitude and a slope to quantify how sensitive the process-induced defects are to the updated part design.

6. The apparatus as set forth in any preceding claim, wherein a sum of the defects across all of the elements is utilized relying upon a criticality factor applied to each individual defect in the plurality of defects based on the structural importance of each of the elements, and/or wherein a criticality is assigned to each of the plurality of elements, and the criticality is multiplied by the likelihood of a defect at each of the elements.

7. The apparatus as set forth in any preceding claim, wherein the processing circuitry is operable to determine an expected life of a final part, and communicating with the additive manufacturing apparatus to manufacture the final part if the expected life is acceptable, and returning to further update at least one of the additive manufacturing parameters and the part design if the expected life is not acceptable.

8. A method of evaluating an additive manufacturing process comprising the steps of:

receiving a set of additive manufacturing parameters and a part design at a controller;

breaking the part design into a plurality of elements and assigning an initial density to each of the plurality of elements;

determining a likelihood of a defect in each of the plurality of elements utilizing the received additive manufacturing parameters and assigned initial densities;

evaluating the volume of defects across the plurality of elements;

updating at least one of the part design, and then determining the likelihood of an updated defect for each of the plurality of elements; and

reaching a solution that is at an acceptable volume of defects, while still satisfying an acceptable part design.

9. The method as set forth in claim 8, wherein the likelihood of a defect is assigned a binary value, and/or wherein the likelihood of a defect at each of the elements has a value equal to or between 0.0 and 1.0.

10. The method as set forth in claim 8 or 9, wherein the step of determining the likelihood of the defect reaches a predicted local temperature for each of the elements, which can then be compared to threshold temperatures, optionally wherein the threshold temperatures include a keyhole threshold temperature, with a keyhole defect being predicted should the local temperature exceed the keyhole threshold temperature and the threshold temperatures also includes a lack of fusion threshold temperature, and a defect being predicted should the local temperature be less than the lack of fusion threshold temperature.

11. The method as set forth in any of claims 8-10, wherein the step of updating the part design utilizes a sensitivity analysis which evaluates how an updated one of the additive manufacturing parameters and the part design will affect the process-induced defects based on a magnitude and a slope that quantifies how sensitive the process-induced defects are to the updated one of the additive manufacturing parameters and the part design.

**EP 4 778 653 A2**

12. The method as set forth in any of claims 8-11, wherein the sum of a plurality of the defects across all of the elements is utilized relying upon a criticality factor applied to each individual defect in the plurality of defects based on the structural importance of each of the elements, and/or wherein a criticality is assigned to each of the plurality of elements, and the criticality is multiplied by the likelihood of a defect at each of the elements.

13. The method as set forth in any of claims 8-11, wherein the method provides a weighting value to each of the plurality of elements which is multiplied by the likelihood of a defect at each of the plurality of elements, with the weighting function being dependent on the structural importance of each element, and a maximum of the weighting element times the likelihood of a defect across all of the plurality of elements is compared to a defect threshold, and the design is further updated should the maximum of the value be greater than the threshold.

14. The method as set forth in any of claims 8-11, wherein the method combines a conventional criterion, such as structural compliance, and manufacturing defects into a single objective function, minimize $\alpha * C(p) + \beta * max(w_i D_i(\rho, P))$ where $C(\rho)$ represents the structural compliance, and $\alpha$ and $\beta$ are weighting factors that balance the importance of compliance and defect minimization.

15. The method as set forth in any of claims 8-14, further comprising determining an expected life of a final part, and communicating with the additive manufacturing apparatus to manufacture the final part if the expected life is acceptable, and returning to further update at least one of the additive manufacturing parameters and the part design if the expected life is not acceptable.

FIG.1

FIG.2A

FIG.2B

FIG.3

160

162 — INPUT DESIGN, SPECIFICATIONS, OBJECT FUNCTION, PROCESS PARAMETERS

164 — RAPID, PHYSICS–BASED PREDICTION OF PROCESS–INDUCED DEFECTS

167 — SOLVING THE MECHANICAL PROBLEM, DETERMINING MECHANICAL RESPONSE, AND COMPUTING SENSITIVITIES

166 — SOLVE ADJOINT PROBLEM

168 — COMPUTE ADJOINT SENSITIVITIES

170 — UPDATE DESIGN USING ADJOINT SENSITIVITIES

172 — RAPID PHYSICS–BASED PREDICTION OF PROCESS–INDUCED DEFECTS

174 — OPTIMIZATION CONVERGES TO A SOLUTION THAT MINIMIZES THE WEIGHTED DEFECTS WHILE SATISFYING ALL CONSTRAINTS

178 — NO

176 — YES

180 — CALCULATED PROBABILITY OF CRACK & TIME FOR CRACK PROPAGATION (OPTIONAL)

182 — OPERATIONAL CRITERIA ARE MET

NO

184 — UPDATE AM PROCESS PARAMETERS (OPTIONAL)

YES

186 — FINAL DESIGN APPROVAL

188 — MANUFACTURE PART

FIG.4A          FIG.4B          FIG.4C          FIG.4D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10254730 B
- US 11531920 B
- US 10252512 B
- US 10252511 B
- US 10252510 B
- US 10252509 B
- US 10252508 B